# EUROPEAN PATENT SPECIFICATION

(11) **EP 1 709 609 B1**
(45) Date of publication and mention of the grant of the patent: **27.05.2020**
(21) Application number: 05702686.6
(22) Date of filing: 17.01.2005
(51) Int. Cl.: G08C 17/00

(54) **ADVANCED CONTROL DEVICE FOR HOME ENTERTAINMENT UTILIZING THREE DIMENSIONAL MOTION TECHNOLOGY**
ERWEITERTE STEUEREINRICHTUNG FÜR DIE HAUSUNTERHALTUNG DURCH VERWENDUNG DREIDIMENSIONALER BEWEGUNGSTECHNOLOGIE
DISPOSITIF DE COMMANDE PERFECTIONNÉ DE DIVERTISSEMENT DOMESTIQUE, À TECHNOLOGIE DE MOUVEMENT TRIDIMENSIONNEL

(30) Priority: 20.01.2004 US 537800 P
(43) Date of publication of application: 11.10.2006
(73) Proprietor: III Holdings 6, LLC, Wilmington, DE 19808 (US)
(72) Inventor: DE RUYTER, Boris Emmanuel Rachmund, NL-5621 BA Eindhoven (NL); LANGMANN, Detlev, NL-5621 BA Eindhoven (NL); TU, Jiawen W., NL-5621 BA Eindhoven (NL); BUIL, Vincentius Paulus, NL-5621 BA Eindhoven (NL); LASHINA, Tatiana A., NL-5621 BA Eindhoven (NL); VAN LEONEN, Evert Jan, NL-5621 BA Eindhoven (NL); EGNER, Sebastian, NL-5621 BA Eindhoven (NL)
(74) Representative: Carpmaels & Ransford LLP
(86) International application number: PCT/IB2005/050182
(87) International publication number: WO 2005/071636

(56) References cited:
- WO-A-99/22338
- WO-A-03/007291
- US-A- 4 700 604
- US-A1- 2002 009 972
- US-B1- 6 603 420

## Description

The present invention relates to the control of home entertainment devices and applications, and more particularly, to a method and system for controlling and transferring data to home entertainment devices by manipulating a control device.

Hand-held devices, such as remote controls devices, are typically used to control consumer electronic devices, such as televisions and gaming machines. As the hand-held devices and consumer electronic devices have become more sophisticated, new techniques for inputting commands to the hand-held devices have been developed. These techniques include methods that detect the orientation of a hand-held device to generate a command. For example, U.S. Patent Numbers 4,745,402 and 4,796,019 disclose methods for controlling the position of a cursor on a television. U.S. Patent Number 6,603,420 discloses a remote control device that detects the direction of movement of the remote control device to control, e.g., the channel and volume selection of a television.

The ability of these hand-held devices to hold data and the development of more sophisticated capabilities in the consumer electronic devices has created new challenges for controlling these consumer electronic devices. For example, it is often necessary to transfer data from the hand-held device to the consumer electronic device or vice versa. The hand-held device should also provide a natural, efficient mechanism for indicating that an action, such as a data transfer, is to be performed. A need therefore exists for an improved hand-held device that is capable of efficiently generating commands and transferring data to or from consumer electronic devices.

US6 956 564 discloses a hand held computer which can be used as an input device to a desk mounted PC. US 6 603 420 discloses a remote control device in which a direction of movement of control is used to generate control signals to send to a receiver. US 2002/009972 discloses a system which detects gestures and transmits control signals based on them.

The invention provides a method and apparatus as defined in the independent claims. Embodiments are defined in the dependent claims.

An apparatus and method are disclosed for generating commands and transferring data between a hand-held device and a base device (including consumer electronic equipment). The hand-held device is capable of detecting the motion of the hand-held device itself, interpreting the motion as a command, and executing or transferring the command. The motion of the device can include gestures made by the user while holding the device, such as the motion of throwing the hand-held device toward a base device, as a user would do when swinging a tennis racket. The commands generated by the user include the transfer of data.

In one embodiment, the user can train the device to learn new motions associated with existing or new commands. For example, the user can make the motion of throwing the hand-held device toward the base device. The hand-held device analyzes the basic components of the motion to create a motion model such that the motion can be uniquely identified in the future.

A more complete understanding of the present invention, as well as further features and advantages of the present invention, will be obtained by reference to the following detailed description and drawings.
FIG. 1 shows an exemplary hand-held device of the 25 present invention;
FIGS. 2A-B illustrate gestures that are interpreted as commands by the hand-held device of FIG. 1;
FIG. 3 is a schematic block diagram of the hand-held device of FIG. 1;
FIG. 4 illustrates an exemplary embodiment of a motion detection subsystem;
FIG. 5 is a flowchart describing an exemplary implementation of the system process of the hand-held device of FIG. 1;
FIG. 6 is a flowchart describing an exemplary implementation of a motion training process; FIG. 7 is a flowchart describing an exemplary implementation of a motion detection process; and
FIG. 8 is a graph illustrating the motion model of a throwing motion based on the expected acceleration in each of three perpendicular planes.

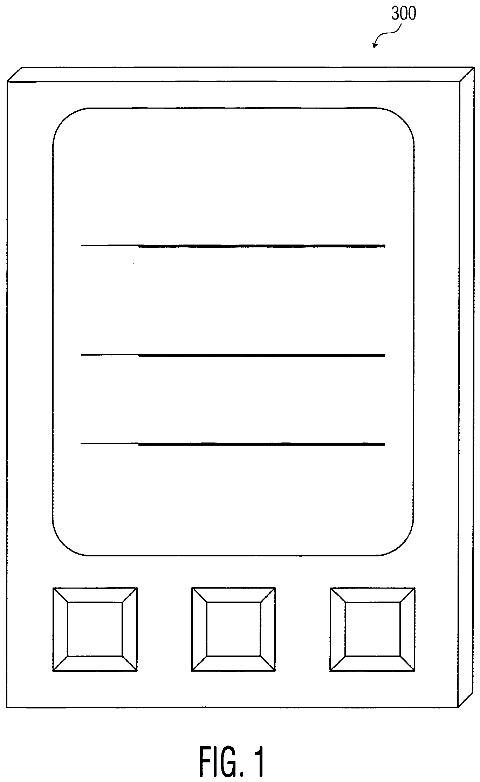

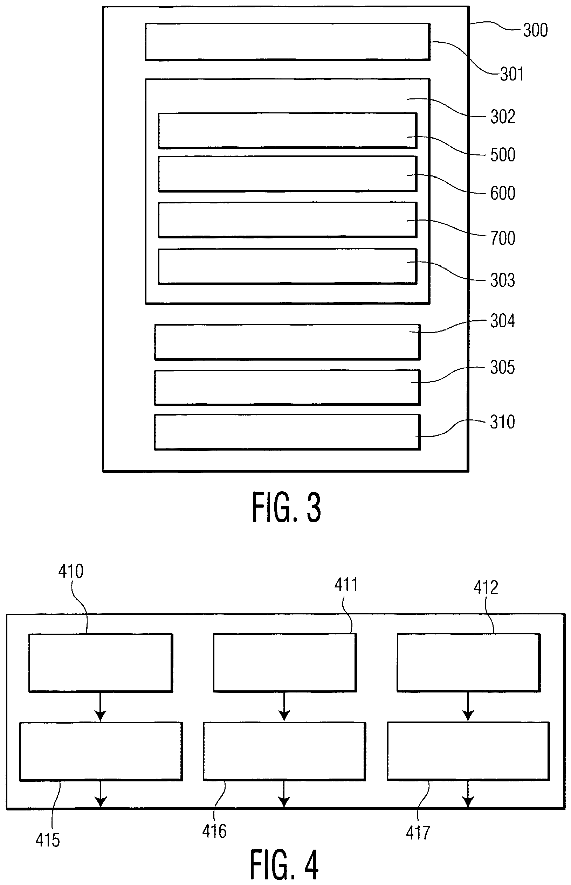

FIG. 1 shows an exemplary hand-held device 300 of the present invention, discussed further below in conjunction with FIG. 3, such as the Philips Super Pronto, modified in accordance with the features of the present invention. The hand-held device 300 is capable of detecting motion of the hand-held device 300, interpreting the detected motion as one or more commands, and executing or transferring the command(s).

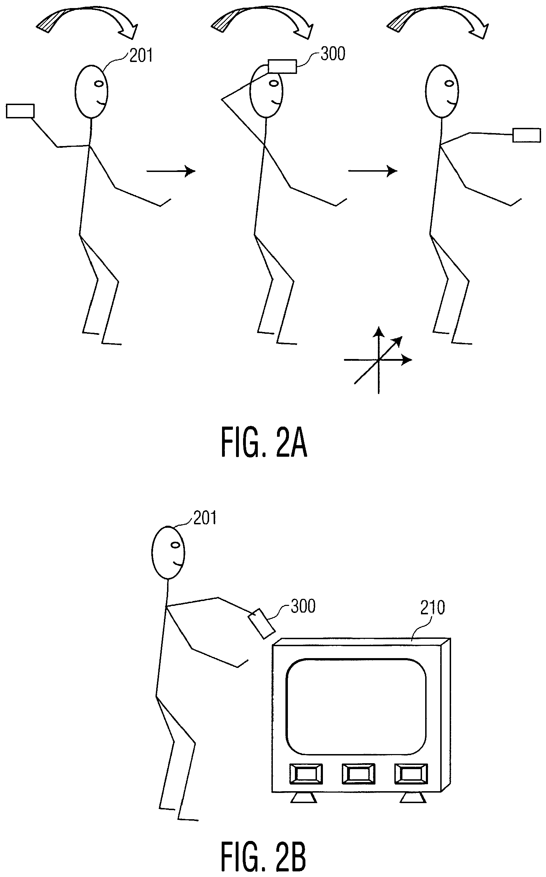

FIGS. 2A-B illustrate gestures that a user can make using the hand-held device 300. FIG. 2A, for example, shows a user 201 making the gesture of throwing the device 300 toward a base device, such as television 210. FIG. 2B shows a user making the gesture of pouring from the device 300 into a base device, such as television 210. The gesture and associated motion indicate that the user 201 would like to transfer data from the hand-held device 300 to the television 210. In this case, the user would first locate and identify the data (e.g. a picture or music) and then make the gesture toward the base device. The data could be identified, for instance, by selecting an item from of a list displayed on the hand-held device 300. The data would then be transferred. In addition, if the data is a picture, it could be (optionally) displayed on the television or, if the data is music, it could be (optionally) played through the speakers. Other gestures include making a pulling motion (not shown) directed from a base device towards the user. In this case, the gesture would indicate that the identified data should be transferred to the hand-held device 300. The data would then be retrieved from either the base device itself, or from another device (e.g. a server). Since there are a number of base devices 210 through 214 located in the area of the user 201, the hand-held device 300 has the ability to identify which device 210-214 should receive the data being transferred (as described in more detail below).FIG. 3 is a schematic block diagram of an exemplary hand-held device 300 of the present invention. As is known in the art, the methods and apparatus discussed herein may be distributed as an article of manufacture that itself comprises a computer-readable medium having computer-readable code means embodied thereon. The computer-readable program code means is operable, in conjunction with a computer system such as central processing unit 301, to carry out all or some of the steps to perform the methods or create the apparatuses discussed herein. The computer-readable medium may be a recordable medium (e.g., floppy disks, hard drives, compact disks, or memory cards) or may be a transmission medium (e.g., a network comprising fiber-optics, the world-wide web, cables, or a wireless channel using time-division multiple access, code-division multiple access, or other radio-frequency channel). Any medium known or developed that can store information suitable for use with a computer system may be used. The computer-readable code means is any mechanism for allowing a computer to read instructions and data, such as magnetic variations on a magnetic medium or height variations on the surface of a compact disk.

Memory 302 will configure the processor 301 to implement the methods, steps, and functions disclosed herein. The memory 302 could be distributed or local and the processor 301 could be distributed or singular. The memory 302 could be implemented as an electrical, magnetic or optical memory, or any combination of these or other types of storage devices. The term "memory" should be construed broadly enough to encompass any information able to be read from or written to an address in the addressable space accessed by processor 301.

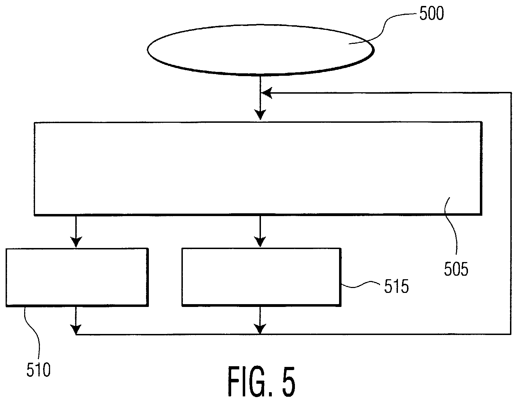

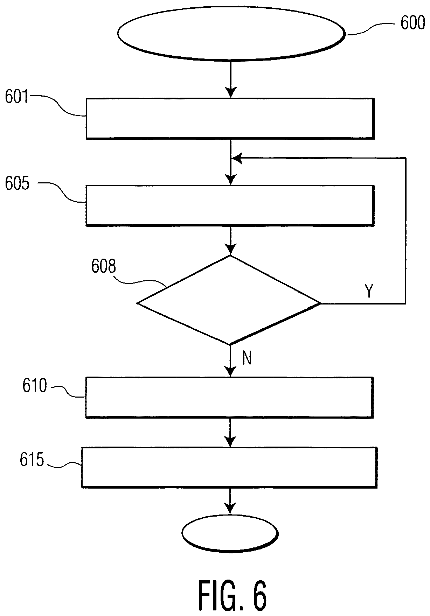

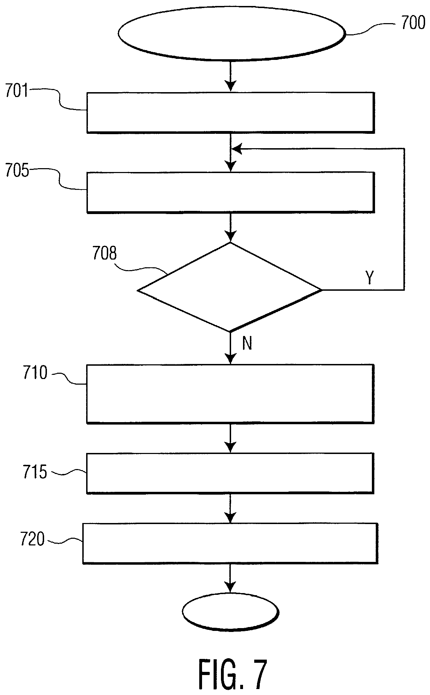

As shown in FIG. 3, the memory 302 includes motion model database 303, system process 500, discussed further below in conjunction with FIG. 5, motion training process 600, discussed further below in conjunction with FIG. 6, and motion detection process 700, discussed further below in conjunction with FIG. 7. Hand-held device 300 also includes motion detection subsystem 400, discussed further below in conjunction with FIG. 4, radio frequency (RF) communication subsystem 305, and infrared detection subsystem (IDS) 310.

The RF communication subsystem 305 provides communication between the handheld device 300 and one or more base devices 210-214 in a known manner. For example, the RF communication subsystem 305 may utilize the IEEE 802.11 standard for wireless communications or any extensions thereof. The IDS 310 emits infrared light in a directional manner in order to signal a base device 210-214 that it should execute the command being transmitted by the device 300. Only the base device 210-214 that detects the infrared signal should execute the transmitted command. The command is transferred to the base device 210-214 via the RF communication subsystem 305 in a known manner. In an alternative embodiment, the command may be transferred by modulating the infrared signal (utilizing, for example, the IR Blaster standard) in a known manner.

FIG. 4 illustrates an exemplary embodiment of motion detection subsystem 400. Motion detection subsystem 400 contains x-axis accelerometer sensor 410, y-axis accelerometer sensor 411, z-axis accelerometer sensor 412, and corresponding analog to digital converters 415, 416, 417. Accelerometer sensors 410, 411, 412 detect the acceleration of the device 300 along the x-axis, y-axis, and z-axis, respectively. The accelerometer sensors 410, 411, 412 may be embodied, for example, using the 3D Motion Sensors commercially available from NECTokin of Union City, California. Analog to digital converters 415, 416, 417 convert the acceleration(s) detected by accelerometer sensors 410, 411, 412, respectively, to a digital form that can be read by processor 301. In alternative embodiments, other components, including stress-sensitive resistive elements, tilt sensors, and magnetic direction sensors, may be utilized to determine the position, orientation and/or speed of movement of the device 300.

FIG. 5 illustrates an exemplary embodiment of system process 500. System process 500 initially waits for a command to be entered during step 505. If, during step 505, a user enters a training command, the system process 500 executes step 510 where motion training process 600 is called. If, during step 505, a user makes a gesture or motion indicative of a command, the system process 500 executes step 515 where motion detection process 700 is called. Upon completion of the called processes 600, 700, system process 500 returns to step 505 to wait for the entry of a new command.

FIG. 6 illustrates an exemplary embodiment of motion training process 600. Motion training process 600 learns new gestures and motions demonstrated by a user to be used for identifying existing or new commands. For instance, a user 201 may want to train the device 300 to detect a throwing motion, such as the motion of throwing the device 300 toward a television 210. The user first presses a switch on the hand-held device 300 to indicate that a new gesture is to be created. (Alternatively, the user can train the hand-held device 300 to interpret a motion as an indication that the training process should be executed.) Motion training process 600 initially waits for motion to be detected by one or more of the accelerometer sensors 410, 411, 412 (step 601) and then records the motion detected by the sensors 410, 411, 412 by periodically sampling and storing data read from analog to digital converters 415, 416, 417 (step 605). After each set of samples have been read during sampling step 605, a test is made to determine if no motion has been detected for a specified period of time indicating that the gesture or motion has been completed (step 608). If motion is detected during step 608, then step 605 is repeated to read the next set of samples; otherwise, motion training process 600 creates and stores a model of the motion captured during step 610. The motion model is created in a known manner For example, the following publications describe methods for analyzing, comparing and modeling motions and gestures: Ho-Sub Yoon, Jung Soh, Younglae J. Bae and Hyun Seung Yang, Hand Gesture Recognition Using Combined Features of Location, Angle and Velocity, Pattern Recognition, Volume 34, Issue 7, 2001, Pages 1491-1501; Cristopher Lee and Yangsheng Xu, Online, Interactive Learning of Gestures for Human/Robot Interfaces, The Robotics Institute, Carnegie Mellon University, Pittsburgh, IEEE International Conference on Robotics and Automation, Minneapolis, 1996; Mu-Chun Su, Yi-Yuan Chen, Kuo-Hua Wang, Chee-Yuen Tew and Hai Huang, 3D Arm Movement Recognition Using Syntactic Pattern Recognition, Artificial Intelligence in Engineering, Volume 14, Issue 2, April 2000, Pages 113-118; Ari Y. Benbasat and Joseph A. Paradiso, An Inertial Measurement Framework for Gesture Recognition and Applications, MIT Media Laboratory, Cambridge, 2001; and Mu-Chun Su, Yi-Yuan Chen, Kuo-Hua Wang, Chee-Yuen Tew and Hai Huang, 3D Arm Movement Recognition Using Syntactic Pattern Recognition, Artificial Intelligence in Engineering, Volume 14, Issue 2, April 2000, Pages 113-118, each incorporated by reference herein.

The created model will be used to interpret future gestures and motions made by the user 201. During step 615, the model created during step 610 is assigned a command or process that is to be executed when the motion associated with the model is detected. The command to be executed is identified utilizing well known methods, for instance, pressing a switch on the hand-held device 300 associated with the command or entering a code associated with the command on a keypad. In an alternative embodiment, the user could enter (record) a series of commands by performing the actions on the system (e.g., on the touch screen), similar to recording a macro in MS Word. The series of commands can then be associated to a single gesture. The assigned command or process is stored with the associated motion model in the motion model database 303.

FIG. 7 illustrates an exemplary embodiment of motion detection process 700. Motion detection process 700 interprets gestures and motions made by a user 201 to determine the command (s) that are to be executed. For instance, if the user 201 makes the motion of throwing the hand-held device 300 towards the television 210, the hand-held device 300 will interpret the gesture as a command to transfer data from the device 300 to the television 210. Motion detection process 700 initially records the motion detected by the accelerometer sensors 410, 411, 412 by periodically sampling and storing the data read from analog to digital converters 415, 416, 417 (step 705). After each set of samples have been read during sampling step 705, a test is made to determine if no motion has been detected for a specified period of time indicating that the gesture or motion has been completed (step 708). If motion is detected during step 708, then step 705 is repeated to read the next set of samples; otherwise, motion detection process 700 compares the data collected during step 705 to the motion models stored in the device 300 (step 710). During step 710, a score is generated for each model comparison. The command or process associated with the model that attained the highest score during step 710 is then executed during step 715. For example, if the model with the highest score was the "throwing motion" model, then a data transfer process (not shown) would be executed in a known manner. The data transfer process can be accomplished, for example, utilizing the 802.11 standard in a well known manner. During step 720, the IDS 310 is also activated, thereby causing an infrared signal to be emitted in the direction of the throwing motion. Only the base device 210-214 that detects the infrared signal will receive the data transferred via the RF communication subsystem 305.

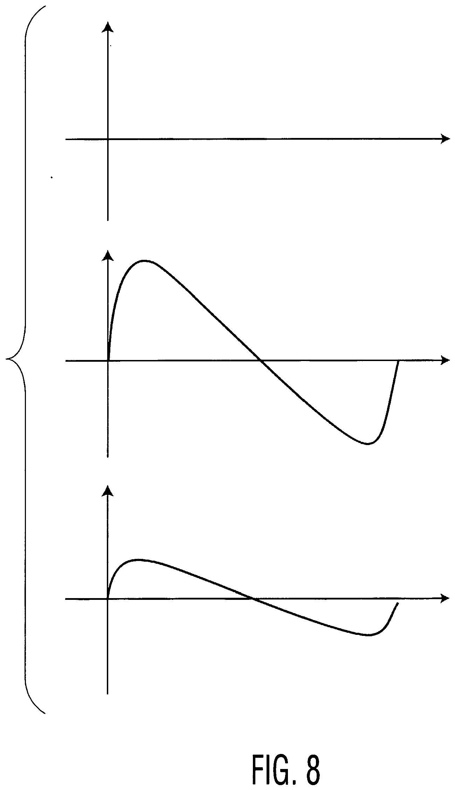

FIG. 8 shows an exemplary motion model representing the throwing motion of FIG. 2A. As is illustrated, the z-axis accelerometer indicates that the motion is in the x-y plane (no motion along the z-axis). As indicated by the x-axis accelerometer, the motion shows a quick acceleration along the x-axis, a peak speed at the halfway point of the motion, and an increasing deceleration as the motion is completed. A similar, but smaller, action is occurring along the y-axis.

It is to be understood that the embodiments and variations shown and described herein are merely illustrative of the principles of this invention and that various modifications may be implemented by those skilled in the art without departing from the scope of the invention.

## Claims

1. An apparatus for controlling a base device (210), comprising:
a memory (302); and
at least one processor, coupled to the memory, operative to:
permit a user to identify music accessible via the apparatus; **characterised in that** the processor is operative to:
detect a gesture-based motion or orientation of said apparatus (300);
interpret said gesture-based motion or orientation to identify a command;
execute said command; and
wherein the command controls transfer of data between said apparatus (300) and
said base device (210) and **in that** said data comprises music for playback via at least one speaker associated with the base device.

2. The apparatus of claim 1, wherein said execute said command operation includes transferring a second command to said base device.

3. The apparatus of claim 1, wherein said detected motion is a throwing motion.

4. The apparatus of claim 1, wherein said detected motion is a pouring motion.

5. The apparatus of claim 1, wherein said detected motion is a pulling motion directed from said base device.

6. The apparatus of claim 1, further operative to add one or more new commands by detecting and recording a demonstration motion.

7. The apparatus of claim 6, further operative to create a motion model from said recorded demonstration motion.

8. The apparatus of claim 7, further operative to assign said one or more new commands to said motion model.

9. The apparatus of claim 1, further comprising three dimensional motion sensors for performing said motion detection operation.

10. The apparatus of claim 1, further comprising one or more motion models, wherein each of said one or more motion models is assigned a command.

11. The apparatus of claim 10, wherein said interpret said motion operation is performed by comparing said detected motion to one or more of said one or more motion models.

12. A method for an apparatus for controlling a base device, comprising:
permitting a user to identify music accessible via the apparatus; **characterised by**:
detecting (700) a gesture-based motion or orientation of said apparatus;
interpreting (710) said gesture-based motion or orientation to identify a command; and
executing said command,
wherein said command controls transfer of data between said apparatus and said base device, and in that said data comprises music for playback via at least one speaker associated with the base device.

13. The method of claim 12, wherein said executing said command step includes transferring a second command to said base device.

14. The method of claim 12, wherein said detecting motion step is a throwing motion.

15. The method of claim 12, wherein said detecting motion step is a pouring motion.

16. The method of claim 12, wherein said detecting motion step is a pulling motion directed from said base device.

17. The method of claim 12, further comprising the step of adding one or more new commands by detecting and recording a demonstration motion.

18. The method of claim 17, further comprising the step of creating a motion model from said recorded demonstration motion.

19. The method of claim 18, further comprising the step of assigning said one or more new commands to said motion model.

20. The method of claim 12, wherein said interpreting said motion step is performed by comparing said detected motion to one or more motion models.

21. An article of manufacture for controlling a base device, comprising:
a machine readable medium containing one or more programs which when executed implement the steps of the method of any one of claims 12 to 20.

## Patentansprüche

1. Vorrichtung zum Steuern eines Basisgeräts (210), die Folgendes aufweist:
einen Speicher (302); und
mindestens einen Prozessor, der mit dem Speicher gekoppelt ist und dazu dient:
einem Benutzer das Identifizieren von Musik zu ermöglichen, die über die Vorrichtung zugänglich ist;
**dadurch gekennzeichnet, dass** der Prozessor dazu dient:
eine gestenbasierte Bewegung oder Ausrichtung der Vorrichtung (300) zu erkennen;
die gestenbasierte Bewegung oder Ausrichtung zu interpretieren, um einen Befehl zu identifizieren;
den Befehl auszuführen; und
wobei der Befehl das Übertragen von Daten zwischen der Vorrichtung (300) und dem Basisgerät (210) steuert und
wobei die Daten Musik zur Wiedergabe über mindestens einen Lautsprecher aufweisen, der zu dem Basisgerät gehört.

2. Vorrichtung nach Anspruch 1, wobei das Ausführen der Befehlsoperation das Übertragen eines zweiten Befehls an das Basisgerät beinhaltet.

3. Vorrichtung nach Anspruch 1, wobei die erkannte Bewegung eine Wurfbewegung ist.

4. Vorrichtung nach Anspruch 1, wobei die erkannte Bewegung eine Gießbewegung ist.

5. Vorrichtung nach Anspruch 1, wobei die erkannte Bewegung eine vom Basisgerät ausgehende Zugbewegung ist.

6. Vorrichtung nach Anspruch 1, die darüber hinaus dazu dient, einen oder mehrere neue Befehle durch Erkennen und Aufzeichnen einer Demonstrationsbewegung hinzuzufügen.

7. Vorrichtung nach Anspruch 6, die darüber hinaus dazu dient, ein Bewegungsmodell aus der aufgezeichneten Demonstrationsbewegung zu erstellen.

8. Vorrichtung nach Anspruch 7, die darüber hinaus dazu dient, den einen oder die mehreren neuen Befehle dem Bewegungsmodell zuzuweisen.

9. Vorrichtung nach Anspruch 1, die darüber hinaus dreidimensionale Bewegungssensoren zum Durchführen der Bewegungserkennungsoperation aufweist.

10. Vorrichtung nach Anspruch 1, die darüber hinaus ein oder mehrere Bewegungsmodelle aufweist, wobei jedem des einen oder der mehreren Bewegungsmodelle ein Befehl zugewiesen ist.

11. Vorrichtung nach Anspruch 10, wobei das Interpretieren der Bewegungsoperation durchgeführt wird, indem die erfasste Bewegung mit einem oder mehreren des einen oder der mehreren Bewegungsmodelle verglichen wird.

12. Verfahren zum Steuern eines Basisgeräts, das Folgendes aufweist:
einem Benutzer das Identifizieren von Musik zu ermöglichen, die über die Vorrichtung zugänglich ist;
**gekennzeichnet durch**:
Erkennen (700) einer gestenbasierten Bewegung oder Ausrichtung der Vorrichtung;
Interpretieren (710) der gestenbasierten Bewegung oder Ausrichtung, um einen Befehl zu identifizieren; und Ausführen des Befehls,
wobei der Befehl das Übertragen von Daten zwischen der Vorrichtung und dem Basisgerät steuert und wobei die Daten Musik zur Wiedergabe über mindestens einen Lautsprecher aufweisen, der zu dem Basisgerät gehört.

13. Verfahren nach Anspruch 12, wobei das Ausführen des Befehlsschritts das Übertragen eines zweiten Befehls an das Basisgerät beinhaltet.

14. Verfahren nach Anspruch 12, wobei der erkannte Bewegungsschritt eine Wurfbewegung ist.

15. Verfahren nach Anspruch 12, wobei der erkannte Bewegungsschritt eine Gießbewegung ist.

16. Verfahren nach Anspruch 12, wobei der erkannte Bewegungsschritt eine vom Basisgerät ausgehende Zugbewegung ist.

17. Verfahren nach Anspruch 12, das darüber hinaus den Schritt zum Hinzufügen eines oder mehrerer neuen Befehle durch Erkennen und Aufzeichnen einer Demonstrationsbewegung aufweist.

18. Verfahren nach Anspruch 17, das darüber hinaus den Schritt des Erstellens eines Bewegungsmodells aus der aufgezeichneten Demonstrationsbewegung aufweist.

19. Verfahren nach Anspruch 18, das darüber hinaus den Schritt des Zuweisens des einen oder der mehreren neuen Befehle zu dem Bewegungsmodell aufweist.

20. Verfahren nach Anspruch 12, wobei das Interpretieren des Bewegungsschritts durchgeführt wird, indem die erfasste Bewegung mit einem oder mehreren Bewegungsmodellen verglichen wird.

21. Herstellungsartikel zum Steuern eines Basisgeräts, der Folgendes aufweist:
ein maschinenlesbares Medium, das ein oder mehrere Programme enthält, die beim Ausführen die Schritte des Verfahrens nach einem der Ansprüche 12 bis 20 implementieren.

## Revendications

1. Appareil pour commander un dispositif de base (210), comprenant :
une mémoire (302) ; et
au moins un processeur, couplé à la mémoire, pouvant être utilisé pour :
permettre à un utilisateur d'identifier de la musique accessible par l'intermédiaire de l'appareil ; **caractérisé en ce que** le processeur peut être utilisé pour :
détecter un mouvement ou une orientation basée sur un geste dudit appareil (300) ;
interpréter ledit mouvement ou ladite orientation basés sur un geste pour identifier une commande ;
exécuter ladite commande ; et
la commande commandant le transfert de données entre ledit appareil (300) et ledit dispositif de base (210), et **en ce que** lesdites données comprennent de la musique pour la lecture par l'intermédiaire d'au moins un haut-parleur associé au dispositif de base.

2. Appareil selon la revendication 1, ladite exécution de ladite opération de commande comprenant le transfert d'une deuxième commande audit dispositif de base.

3. Appareil selon la revendication 1, ledit mouvement détecté étant un mouvement de basculement.

4. Appareil selon la revendication 1, ledit mouvement détecté étant un mouvement de versement.

5. Appareil selon la revendication 1, ledit mouvement détecté étant un mouvement de traction dirigé à partir dudit dispositif de base.

6. Appareil selon la revendication 1, pouvant être utilisé en outre pour ajouter une ou plusieurs nouvelles commandes en détectant et en enregistrant un mouvement de démonstration.

7. Appareil selon la revendication 6, pouvant être utilisé en outre pour créer un modèle de mouvement à partir dudit mouvement de démonstration enregistré.

8. Appareil selon la revendication 7, pouvant être utilisé en outre pour attribuer ladite une ou plusieurs nouvelles commandes audit modèle de mouvement.

9. Appareil selon la revendication 1, comprenant en outre des capteurs de mouvement tridimensionnels pour réaliser ladite opération de détection de mouvement.

10. Appareil selon la revendication 1, comprenant en outre un ou plusieurs modèles de mouvement, une commande étant attribuée à chacun desdits un ou plusieurs modèles de mouvement.

11. Appareil selon la revendication 10, ladite opération d'interprétation dudit mouvement étant réalisée en comparant ledit mouvement détecté à un ou plusieurs desdits un ou plusieurs modèles de mouvement.

12. Procédé pour un appareil destiné à commander un dispositif de base, comprenant :
le fait de permettre à un utilisateur d'identifier de la musique accessible par l'intermédiaire de l'appareil ; **caractérisé par** :
la détection (700) d'un mouvement ou d'une orientation basés sur un geste dudit appareil ;
l'interprétation (710) dudit mouvement ou de ladite orientation basés sur un geste pour identifier une commande ; et
l'exécution de ladite commande,
ladite commande commandant le transfert de données entre ledit appareil et ledit dispositif de base, et en ce que lesdites données comprennent de la musique pour la lecture par l'intermédiaire au moins d'un haut-parleur associé au dispositif de base.

13. Procédé selon la revendication 12, ladite exécution de ladite étape de commande comprenant le transfert d'une deuxième commande audit dispositif de base.

14. Procédé selon la revendication 12, ladite étape de détection de mouvement étant un mouvement de basculement.

15. Procédé selon la revendication 12, ladite étape de détection de mouvement étant un mouvement de versement.

16. Procédé selon la revendication 12, ladite étape de détection de mouvement étant un mouvement de traction dirigé à partir dudit dispositif de base.

17. Procédé selon la revendication 12, comprenant en outre l'étape d'ajout d'une ou plusieurs nouvelles commandes en détectant et en enregistrant un mouvement de démonstration.

18. Procédé selon la revendication 17, comprenant en outre l'étape de création d'un modèle de mouvement à partir dudit mouvement de démonstration enregistré.

19. Procédé selon la revendication 18, comprenant en outre l'étape d'attribution de ladite une ou plusieurs nouvelles commandes audit modèle de mouvement.

20. Procédé selon la revendication 12, ladite étape d'interprétation dudit mouvement étant réalisée en comparant ledit mouvement détecté à un ou plusieurs modèles de mouvement.

21. Article manufacturé pour commander un dispositif de base, comprenant :
un support lisible par machine contenant un ou plusieurs programmes qui, lorsqu'ils sont exécutés, mettent en œuvre les étapes du procédé selon l'une quelconque des revendications 12 à 20.
